# EUROPÄISCHE PATENTSCHRIFT

(11) **EP 3 706 006 B1**
(45) Veröffentlichungstag und Bekanntmachung des Hinweises auf die Patenterteilung: **17.07.2024**
(21) Anmeldenummer: 19161305.8
(22) Anmeldetag: 07.03.2019
(51) Int. Cl.: G06F 13/24

(54) **ÜBERWACHUNGSSYSTEM**
MONITORING SYSTEM
SYSTÈME DE SURVEILLANCE

(43) Veröffentlichungstag der Anmeldung: 09.09.2020
(73) Patentinhaber: Vorwerk & Co. Interholding GmbH, 42270 Wuppertal (DE)
(72) Erfinder: Lang, Torsten, 42657 Solingen (DE)
(74) Vertreter: Bals & Vogel Patentanwälte PartGmbB

(56) Entgegenhaltungen:
- US-A1- 2008 307 140
- US-A1- 2018 285 292
- BOSCH: "CAN Specification, version 2.0", BOSCH CAN SPECIFICATION VERSION 2.0, XX, XX, 1 January 1991 (1991-01-01), pages 1 - 72, XP002219808

## Beschreibung

Die vorliegende Erfindung betrifft ein Überwachungssystem für ein Haushaltsgerät, insbesondere für eine Küchenmaschine mit wenigstens einer Bearbeitungsvorrichtung zur zumindest teilweise automatischen Zubereitung von Lebensmitteln. Ferner bezieht sich die Erfindung auf ein System, ein Haushaltsgerät sowie ein Verfahren.

Es ist aus dem Stand der Technik bekannt, dass eine reguläre Datenübertragung bei einem Haushaltsgerät an den regulären Betrieb des Haushaltsgeräts angepasst ist, und somit ggf. verhältnismäßig langsam für zeitunkritische Daten über standardisierte Schnittstellen erfolgen kann. Somit können der technische Aufwand für die Datenübertragung und damit auch die Kosten herabgesenkt werden. Allerdings müssen häufig zusätzliche Datenleitungen vorgesehen sein, um im Ausnahmefall einen schnellen und hochprioritären Schaltvorgang initiieren zu können. Die Nutzung dieser zusätzlichen Datenleitungen, z. B. für sogenannte Interrupt-Signale, erfordert somit auch einen weiteren technischen Aufwand, und ggf. einen erhöhten Bauraumbedarf. Auch die Montage kann hierdurch aufwendiger werden.

Aus der US 2018/0285292 A1 ist der SLIM-Bus bekannt, der neben der Übertragung von Daten, die Übertragung einer In-Band-Unterbrechungsnachricht über eine SLIM-Bus-Kommunikationsverbindung ermöglicht. Die CAN-Bus Spezifikation XP002219808 offenbart ein Bus, bei dem der Signalpegel eines Busteilnehmers die Datenübertragung eines anderen Busteilnehmers überlagern kann.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Lösung zur Übertragung eines Ereignissignals bereitzustellen, welches für einen Ausnahmefall spezifisch ist. Insbesondere sollen hierfür die standardisierten und/oder vorhandenen Datenleitungen verwendet werden können, um vorzugsweise den Aufbau der Vorrichtung nicht zu verkomplizieren.

Die voranstehende Aufgabe wird gelöst durch ein Überwachungssystem mit den Merkmalen des unabhängigen Anspruchs 1, ein System mit den Merkmalen des Anspruchs 8, ein Haushaltsgerät mit den Merkmalen des Anspruchs 11 sowie durch ein Verfahren mit den Merkmalen des Verfahrensanspruchs 12. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Überwachungssystem beschrieben sind, selbstverständlich auch im Zusammenhang mit dem erfindungsgemäßen weiteren System, dem erfindungsgemäßen Haushaltsgerät sowie dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Überwachungssystem gemäß Anspruch 1 für ein Haushaltsgerät, vorzugsweise für das Haushaltsgerät mit zumindest einer Bearbeitungsvorrichtung des Haushaltsgeräts, insbesondere für eine Küchenmaschine mit wenigstens einer Bearbeitungsvorrichtung zur zumindest teilweise automatischen Zubereitung von Lebensmitteln oder für einen Staubsauger mit zumindest einer Bearbeitungsvorrichtung wie einen Antrieb, aufweisend:
- wenigstens eine (oder eine einzige erste) Übertragungsleitung zur Verwendung für eine (insbesondere reguläre) Datenübertragung durch eine Datenverarbeitungsvorrichtung des Haushaltsgeräts und eine Verarbeitungseinheit des Haushaltsgeräts, insbesondere um mittels der übertragenen Daten (dieser regulären Datenübertragung) die Verarbeitungseinheit für den Betrieb der wenigstens einen Bearbeitungsvorrichtung anzusteuern,
- eine elektronische Auslöseanordnung zur Erkennung eines Auslöseereignisses bei dem Haushaltsgerät, insbesondere bei der Verarbeitungseinheit,
- eine elektronische Ausgabeanordnung zur Ausgabe einer Unterbrechungsanforderung an die Datenverarbeitungsvorrichtung.

Das Auslöseereignis und/oder die Unterbrechungsanforderung können jeweils als Signal, insbesondere ein elektrisches Signal, ausgeführt sein.

Die Auslöseanordnung und/oder die Ausgabeanordnung können jeweils als eine elektronische Schaltung, insbesondere Schaltungsanordnung, ausgebildet sein.

Die Übertragungsleitung ist bspw. eine elektrische Datenleitung, bspw. in der Form einer Litze. Bei der Übertragungsleitung handelt es sich vorzugsweise um eine standardisierte und/oder (bereits) vorhandene Übertragungsleitung. Die Übertragungsleitung kann zumindest eine oder auch genau eine ("1") (galvanisch getrennte) Leitung aufweisen.

Die Datenverarbeitungsvorrichtung und/oder die Verarbeitungseinheit können jeweils wenigstens eine elektronische Schaltung aufweisen.

Im Rahmen der Erfindung ist vorgesehen, dass die Auslöseanordnung und die Ausgabeanordnung jeweils mit der Übertragungsleitung gekoppelt sind, um die Übertragungsleitung zusätzlich zur Datenverarbeitungsvorrichtung und Verarbeitungseinheit für eine Übertragung eines Ereignissignals bei erkanntem Auslöseereignis zu verwenden, um ausgelöst durch das Ereignissignal die Unterbrechungsanforderung auszugeben. Das Ereignissignal ist ein bestimmtes elektrisches Potential an der Übertragungsleitung. Das Ereignissignal kann bspw. durch einen Schaltvorgang eines Schaltmittels der Auslöseanordnung auf die (standardisierte und/oder vorhandene) Übertragungsleitung zur Übertragung ausgegeben werden. Somit kann ein und dieselbe (standardisierte und/oder vorhandene) Übertragungsleitung für zwei unterschiedliche Zwecke/Anwendungen, nämlich eine reguläre Datenübertragung und eine zusätzliche Übertragung eines Ereignissignals bei erkanntem Auslöseereignis, genutzt werden. Hierbei kann zur gleichen Zeit (gemeint ist: in genau einem Zeitpunkt / nicht simultan) entweder die reguläre Datenübertragung oder die zusätzliche Übertragung eines Ereignissignals bei erkanntem Auslöseereignis über die Übertragungsleitung erfolgen, aber nicht beides gleichzeitig.

Erfindungsgemäß kann der Vorteil erzielt werden, dass auf eine zusätzliche Datenleitung für die Übertragung des Ereignissignals, also insbesondere für einen schnelleren und hochprioritären Schaltvorgang, verzichtet werden kann. Zusätzlich ergibt sich der Vorteil, dass das Ereignissignal nicht mittels der (regulären) Datenübertragung übertragen werden muss, und somit die technischen Anforderungen an die (reguläre) Datenübertragung geringer sein können. Es wird dabei im Rahmen der Erfindung unterschieden zwischen der Datenübertragung, insbesondere als eine reguläre Datenübertragung bezeichnet, welche z. B. durch eine bestimmte Übertragungstechnologie durch die Datenverarbeitungsvorrichtung und die Verarbeitungseinheit bereitgestellt wird, und die Übertragung des Ereignissignals, insbesondere als eine Ereignisübertragung bezeichnet, welche durch die Auslöseanordnung und die Ausgabeanordnung bereitgestellt wird. Die Auslöseanordnung kann dabei als ein Sender und die Ausgabeanordnung als ein Empfänger für diese Übertragung aufgefasst werden. Die Übertragung des Ereignissignals kann dabei als eine Notfallübertragung aufgefasst werden, welche nicht regulär, sondern nur im Ausnahmefall durchgeführt wird.

Die technische Realisierung der Ereignisübertragung unterscheidet sich von der Übertragungstechnologie der regulären Datenübertragung. Bspw. basiert die Übertragungstechnologie der Datenübertragung auf einer Nutzung einer jeweiligen UART-(engl. Universal Asynchronous Receiver Transmitter) Schnittstelle der Datenverarbeitungsvorrichtung und/oder der Verarbeitungseinheit. Die Ereignisübertragung kann hingegen darauf basieren, dass das Ereignissignal durch eine Festlegung, insbesondere durch ein Erzwingen, eines bestimmten elektrischen Potentials auf der Übertragungsleitung auf die Übertragungsleitung ausgegeben wird. Damit kann die Übertragung des Ereignissignals unabhängig von der regulären Datenübertragung erfolgen, und die reguläre Datenübertragung ggf. auch dabei verhindern und/oder unterbrechen. Somit wird stets gewährleistet, dass die Übertragung des Ereignissignals vorrangig zur regulären Datenübertragung über die Übertragungsleitung durchgeführt werden kann.

Bei dem Ereignissignal kann es sich um eine digitale Information, vorzugsweise um eine 1-Bit Information, handeln. Somit kann optional die Auslöseanordnung und die Ausgabeanordnung, und/oder die Ereignisübertragung, nur zur Übertragung einer 1-Bit Information geeignet sein.

Die (reguläre) Datenübertragung kann z. B. (im Gegensatz zur Übertragung des Ereignissignals) als eine verschlüsselte Übertragung und/oder eine Übertragung mit Zeitstempeln ausgeführt sein.

Bei der Datenverarbeitungsvorrichtung und der Verarbeitungseinheit kann es sich um zwei über die Datenübertragung miteinander kommunizierende elektronische Verarbeitungssysteme, insbesondere Controller-Systeme, handeln. Die Verarbeitungseinheit kann dabei neben einem Mikrocontroller ggf. noch eine Leistungselektronik für eine Spannungsversorgung für das Haushaltsgerät und/oder für eine Ansteuerung der wenigstens einen Bearbeitungsvorrichtung aufweisen, und/oder auch eine Netzüberwachungsvorrichtung und/oder ein Netzteil umfassen.

Es kann eine Übertragungsanordnung vorgesehen sein, deren Teil zumindest eine Übertragungsleitung ist. Bspw. kann die Übertragungsanordnung wenigstens oder genau zwei Übertragungsleitungen für die (reguläre) Datenübertragung aufweisen. Eine erste der Übertragungsleitungen kann dabei zum Senden von Daten von der Datenverarbeitungsvorrichtung zur Verarbeitungseinheit vorgesehen sein (und damit als eine Sende-Empfangs-Leitung bzw. als eine TX-Leitung bezeichnet werden). Die zweite der Übertragungsleitungen kann zum Senden von Daten in umgekehrter Richtung von der Verarbeitungseinheit zur Datenverarbeitungsvorrichtung vorgesehen sein (und damit als eine Empfangs-Sende-Leitung bzw. RX-Leitung bezeichnet werden). In anderen Worten kann die Übertragungsanordnung bzw. die zumindest eine Übertragungsleitung eine bidirektionale Datenübertragung bereitstellen. Ferner kann die Übertragungsanordnung eine Sende-Empfangs-Anordnung der Datenverarbeitungsvorrichtung, und ein korrespondierendes Sende-Empfangs-Mittel der Verarbeitungseinheit umfassen. Die Sende-Empfangs-Anordnung und das Sende-Empfangs-Mittel können jeweils als Schnittstelle, insbesondere als eine UART-Schnittstelle, ausgebildet sein. Damit kann die Datenübertragung durch die Sende-Empfangs-Anordnung und das Sende-Empfangs-Mittel über die (wenigstens eine) Übertragungsleitung bereitgestellt werden. Somit kann auch eine Datenübertragung bereitgestellt werden, welche im Vergleich zur Übertragung des Ereignissignals langsam ist, und/oder protokollbasiert erfolgt, und/oder nicht echtzeitfähig ausgewertet werden kann. Dagegen kann die Übertragung des Ereignissignals mit geringerer zeitlicher Verzögerung als bei der regulären Datenübertragung, und/oder echtzeitfähig und/oder protokollunabhängig erfolgen. Im Gegensatz zur regulären Datenübertragung ist daher die Übertragung des Ereignissignals als eine zeitkritische Übertragung ausgeführt.

Es ist vorgesehen, dass die Auslöseanordnung und die Ausgabeanordnung jeweils mit der (ersten) Übertragungsleitung gekoppelt sind, welche insbesondere zum Senden von Daten von der Datenverarbeitungsvorrichtung zur Verarbeitungseinheit vorgesehen ist. Jedoch ermöglicht es die Auslöseanordnung und die Ausgabeanordnung, das Ereignissignal über diese Übertragungsleitung in umgekehrter Richtung zu übertragen, also zur Datenverarbeitungsvorrichtung. Damit kann die erste Übertragungsleitung zur Übertragung des Ereignissignals entgegen der eigentlichen primären Zweckbestimmung mit dem Ereignissignal überlagert werden.

Das Haushaltsgerät kann bspw. als eine Küchenmaschine oder als ein Staubsauger oder als ein Ofen oder dergleichen ausgeführt sein. Weiter kann die Datenverarbeitungsvorrichtung dazu ausgeführt sein, eine Datenverarbeitung für eine Benutzerinteraktion durchzuführen (d. h. bspw. eine Eingabe durch einen Benutzer des Haushaltsgeräts, also eine Benutzereingabe, auszuwerten, und/oder eine Ausgabe von Informationen an den Benutzer vorzunehmen). Anhand der Benutzereingabe kann insbesondere wenigstens eine Funktion des Haushaltsgeräts angesteuert werden, insbesondere wenigstens eine Funktion zur zumindest teilweise automatischen Zubereitung von Lebensmitteln. Hierzu kann die Datenverarbeitungsvorrichtung die Datenübertragung vorteilhafterweise dazu nutzen, um die Verarbeitungseinheit zur Aktivierung dieser Funktion anzusteuern. Die Verarbeitungseinheit ist bspw. dazu ausgeführt, eine Leistungselektronik des Haushaltsgeräts anzusteuern und/oder bereitzustellen. Darüber kann dann wenigstens eine Bearbeitungsvorrichtung des Haushaltsgeräts angesteuert werden.

Die wenigstens eine Bearbeitungsvorrichtung ist bspw. eine Vorrichtung, welche mit höherer elektrischer Leistung betrieben werden muss, als die Datenverarbeitungsvorrichtung. So kann die wenigstens eine Bearbeitungsvorrichtung beispielhaft einen Motor und/oder eine Heizung und/oder einen Antrieb für ein Rührwerk und/oder dergleichen umfassen.

Die Datenverarbeitungsvorrichtung kann bspw. als eine Datenverarbeitungsanlage wie ein Computer für das Haushaltsgerät ausgeführt sein, welche ggf. zum Betrieb und insbesondere zur Datenverarbeitung ein Betriebssystem, wie ein Linux-System, und/oder wenigstens ein weiteres Computerprogramm aufweisen kann. Die Datenverarbeitungsvorrichtung kann vollständig in das Haushaltsgerät integriert, also verbaut sein.

Auch die Verarbeitungseinheit kann vollständig in das Haushaltsgerät integriert, also verbaut sein. Die Verarbeitungseinheit kann ferner im Gegensatz zur Datenverarbeitungsvorrichtung echtzeitfähig ausgebildet sein. Dies hängt damit zusammen, dass durch die Verarbeitungseinheit eine zeitkritische Ansteuerung des Haushaltsgeräts bzw. der Leistungselektronik ermöglicht werden kann. Ferner kann die Verarbeitungseinheit als wenigstens ein Mikrocontroller ausgebildet sein oder wenigstens einen Mikrocontroller aufweisen, und insbesondere separat und/oder räumlich getrennt von der Datenverarbeitungsvorrichtung ausgebildet sein.

Die Datenverarbeitungsvorrichtung und die Verarbeitungseinheit und insbesondere die Bearbeitungsvorrichtung, die Auslöseanordnung sowie die Ausgabeanordnung können im Haushaltsgerät angeordnet, insbesondere befestigt, und damit Teil des Haushaltsgeräts sein. Eine Netzüberwachungsvorrichtung kann als Teil des Haushaltsgeräts und/oder der Verarbeitungseinheit ausgebildet sein, und ggf. mit der Verarbeitungseinheit in Signalverbindung stehen. Die Netzüberwachungsvorrichtung dient zur Überwachung einer Energieversorgung für das Haushaltsgerät und konkret einer Energieversorgung für die Datenverarbeitungsvorrichtung, und ist hierzu bspw. mit einem Netzteil des Haushaltsgeräts elektrisch und/oder signaltechnisch verbunden.

Zudem ist im Rahmen der Erfindung vorgesehen, dass die Auslöseanordnung ein Erkennungsmittel aufweist, um das Auslöseereignis zu erkennen und (bei Erkennung) das Ereignissignal auf der Übertragungsleitung für die Übertragung auszugeben, und der Datenübertragung zu überlagern. Zusätzlich ist es vorgesehen, dass die Ausgabeanordnung ein Detektionsmittel aufweist, um bei einer Detektion des ausgegebenen Ereignissignals an der Übertragungsleitung, und damit ausgelöst durch das Ereignissignal, die Unterbrechungsanforderung an die Datenverarbeitungsvorrichtung auszugeben. Bspw. kann das Erkennungsmittel ein elektronisches Schaltmittel aufweisen, welches ausgelöst durch die Erkennung (Detektion) des Auslöseereignisses geschaltet wird. Dieses Schalten des Schaltmittels kann wiederrum bewirken, dass das Schaltmittel eine elektrische Verbindung der Übertragungsleitung mit einem definierten Potential herstellt. Diese hergestellte elektrische Verbindung kann somit das Ereignissignal auf der Übertragungsleitung ausgeben, insbesondere aufprägen. Somit kann zuverlässig und technisch einfach die Ereignisübertragung ermöglicht werden.

Ein weiterer Vorteil im Rahmen der Erfindung ist erzielbar, wenn die Ausgabeanordnung und die Auslöseanordnung dediziert (spezifisch) für die Übertragung des Ereignissignals vorgesehen sind, um unabhängig von der Datenübertragung und/oder prioritär zur Datenübertragung das Ereignissignal über die Übertragungsleitung zu übertragen. Das Ereignissignal kann hierzu bspw. derart auf der Übertragungsleitung ausgegeben werden, dass die (reguläre) Datenübertragung unterdrückt wird. Dies geschieht bspw. durch das Aufprägen eines elektrischen Potentials auf der Übertragungsleitung. Somit ist gewährleistet, dass das Ereignissignal in einer vorgegebenen Zeit, und damit echtzeitfähig, an die Ausgabeanordnung und somit ggf. auch an die Datenverarbeitungsvorrichtung übertragen wird.

Vorteilhaft ist es zudem, wenn die Auslöseanordnung eine Kopplungsanordnung mit einem elektronischen Schaltmittel und insbesondere wenigstens einem Widerstand aufweist, wobei die Kopplungsanordnung die Übertragungsleitung mit einem definierten Potential, insbesondere Massepotential, elektrisch verbindet, um ausgelöst durch ein Schalten des Schaltmittels, insbesondere unabhängig von der Datenübertragung und/oder prioritär zur Datenübertragung, das Ereignissignal auf der Übertragungsleitung für die Übertragung auszugeben. In anderen Worten kann durch ein Schalten des Schaltmittels bewirkt werden, dass die Übertragungsleitung elektrisch über den wenigstens einen Widerstand mit dem definierten Potential elektrisch verbunden wird. Das Schaltmittel kann bspw. Teil des Erkennungsmittels sein, da dieses Schalten bei einem Erkennen des Auslöseereignisses erfolgen kann.

Vorteilhafterweise kann bei der Erfindung vorgesehen sein, dass eine Netzüberwachungsvorrichtung zur Überwachung einer Energieversorgung des Haushaltsgeräts vorgesehen ist, um das Auslöseereignis an die Auslöseanordnung auszugeben, wobei vorzugsweise das Auslöseereignis für einen Ausfall der Energieversorgung spezifisch ist. Bei diesem Ausfall kann es sich um einen unerwarteten Netzausfall (Versorgungsspannungsverlust) handeln, welcher z. B. beim manuellen Ziehen des Netzsteckers auftreten kann. Bei einem solchen Ereignis muss das sicherere Herunterfahren der Datenverarbeitungsvorrichtung gewährleistet werden. Es können dabei Pufferkondensatoren des Haushaltsgeräts vorgesehen sein, welche eine Restenergie für das Herunterfahren liefern. Diese Restenergie reicht je nach Auslegung der Pufferkondensatoren nur für eine begrenzte Zeit, z. B. nur für einige Millisekunden. Eine Übertragung einer Information über das Ereignis über die relativ zeitverzögerte Datenübertragung von der Verarbeitungseinheit an die Datenverarbeitungsvorrichtung (z. B. über eine zweite Übertragungsleitung) würde jedoch so lange benötigen, dass die Restenergie bei Empfang und Verarbeitung dieser Information durch die Datenverarbeitungsvorrichtung bereits aufgebraucht wäre. Ein Herunterfahren ist dann nicht mehr sicher möglich. Daher kann es vorgesehen sein, dass die Auslöseanordnung den Versorgungsspannungsverlust als das Auslöseereignis feststellt (detektiert) und das Ereignissignal auf die Übertragungsleitung ausgibt. Die Detektion des Ereignissignals durch die Ausgabeanordnung kann dazu führen, dass ein so genannter Interrupt bei der Datenverarbeitungsvorrichtung durch die Ausgabeanordnung ausgelöst wird, um ein Herunterfahren der Datenverarbeitungsvorrichtung zu bewirken. In anderen Worten wird ein Betriebssystem der Datenverarbeitungsvorrichtung zum Herunterfahren durch die ausgegebene Unterbrechungsanforderung gezwungen. Zusätzlich können weitere Komponenten des Haushaltsgeräts, welche die Restenergie verbrauchen, wie z. B. eine Beleuchtung und/oder eine WLAN-Schnittstelle, hierdurch abgeschaltet werden.

Die Netzüberwachungsvorrichtung kann dazu ausgeführt sein, einen Ausfall der Energieversorgung des Haushaltsgeräts zu detektieren. Hierzu kann z. B. durch die Netzüberwachungsvorrichtung ein Wechsel (Phasenwechsel bzw. ein Nullwechsel) einer Versorgungsspannung des Netzteils erfasst, insbesondere gezählt werden. Der Ausfall kann z. B. dadurch detektiert werden, dass erkannt wird, wenn dieser Wechsel für eine bestimmte Zeitdauer ausbleibt. In diesem Fall kann die Netzüberwachungsvorrichtung z. B. das Auslöseereignis an die Auslöseanordnung ausgeben.

Ein weiterer Vorteil im Rahmen der Erfindung ist erzielbar, wenn die Auslöseanordnung ein Schaltmittel aufweist, welches zur Erkennung des Auslöseereignisses einen Steueranschluss aufweist, um das Auslöseereignis, insbesondere von einer Netzüberwachungsvorrichtung, zu empfangen, und vorzugsweise um bei dem Empfang ein Schalten des Schaltmittels zu initiieren. Hierzu ist das Schaltmittel bspw. als Transistor und/oder als Feldeffekttransistor und/oder als Metall-Oxid-Halbleiter-Feldeffekttransistor ausgebildet, um ein zuverlässiges Herstellen einer elektrischen Verbindung zu ermöglichen.

Gemäß einer vorteilhaften Weiterbildung der Erfindung kann vorgesehen sein, dass die Verarbeitungseinheit einen Mikrocontroller aufweist, wobei insbesondere die Auslöseanordnung ein Schaltmittel aufweist, welches in den Mikrocontroller integriert ist. In anderen Worten kann in kostengünstiger Weise der Mikrocontroller für die Ausgabe des Ereignissignals genutzt werden.

Vorzugsweise kann vorgesehen sein, dass die Datenverarbeitungsvorrichtung als ein Computer ausgebildet ist, welcher insbesondere zum Betreiben durch ein Betriebssystem, insbesondere Linux, ausgeführt ist, und vorzugsweise mit einer Ein- und/oder Ausgabevorrichtung in Signalverbindung steht, um anhand einer durch die Ein- und/oder Ausgabevorrichtung übermittelten Benutzereingabe die Verarbeitungseinheit über die Datenübertragung anzusteuern. Die Ein- und/oder Ausgabevorrichtung umfasst bspw. ein Touchscreen und/oder ein Tastenfeld und/oder ein Display oder dergleichen. Bspw. können über die Ein- und/oder Ausgabevorrichtung Funktionen des Haushaltsgeräts ausgewählt und/oder aktiviert werden, sodass über die übertragenen Daten eine Ansteuerung dieser Funktionen bewirkt wird. Auch ist es bspw. bei einer Küchenmaschine möglich, mittels der Ein- und/oder Ausgabevorrichtung Rezepte als die Funktionen durch den Benutzer auswählen zu lassen und/oder zu aktivieren, um über die Datenübertragung die Bearbeitungsvorrichtung zur zumindest teilweise automatisierten Zubereitung von Lebensmitteln anhand der Rezepte anzusteuern. Die Nutzung der Funktionen kann verhindert sein, wenn das Ereignissignal übertragen wird.

Es ist ferner denkbar, dass die Datenverarbeitungsvorrichtung dazu ausgeführt ist, mittels der Datenübertragung die Verarbeitungseinheit für den Betrieb von wenigstens einer Bearbeitungsvorrichtung des Haushaltsgeräts anzusteuern, wobei vorzugsweise für den Betrieb eine Leistungselektronik in die Verarbeitungseinheit integriert ist und/oder mit der Verarbeitungseinheit in Signalverbindung steht. Bspw. kann über die Datenübertragung die Bearbeitungsvorrichtung zur zumindest teilweise automatisierten Zubereitung von Lebensmitteln angesteuert werden.

Ebenfalls Gegenstand der Erfindung ist ein System zum Betreiben eines Haushaltsgeräts, aufweisend:
- eine elektronische Verarbeitungseinheit zur Ansteuerung des Haushaltsgeräts, insbesondere wenigstens einer Bearbeitungsvorrichtung des Haushaltsgeräts,
- eine elektronische Datenverarbeitungsvorrichtung zur Verarbeitung von Daten und zur Übertragung der Daten (Datenübertragung) für die Ansteuerung an die Verarbeitungseinheit über wenigstens oder genau eine Übertragungsleitung,
- ein erfindungsgemäßes Überwachungssystem.

Hierbei ist vorgesehen, dass die Auslöseanordnung und die Ausgabeanordnung jeweils mit der Übertragungsleitung (insbesondere elektrisch) gekoppelt sind, um die Übertragungsleitung zusätzlich zur (Datenübertragung der) Datenverarbeitungsvorrichtung und Verarbeitungseinheit für eine Übertragung eines Ereignissignals bei (insbesondere einem durch die Erkennung der Auslöseanordnung) erkanntem Auslöseereignis zu verwenden, um vorzugsweise ausgelöst durch das Ereignissignal die Unterbrechungsanforderung an die Datenverarbeitungsvorrichtung auszugeben. Damit bringt das erfindungsgemäße System die gleichen Vorteile mit sich, wie sie ausführlich mit Bezug auf ein erfindungsgemäßes Überwachungssystem beschrieben worden sind.

Ein weiterer Vorteil kann im Rahmen der Erfindung erzielt werden, wenn die Datenverarbeitungsvorrichtung für einen Empfang der ausgegebenen Unterbrechungsanforderung mit der Ausgabeanordnung in Signalverbindung steht, insbesondere über einen Unterbrechungseingang der Datenverarbeitungsvorrichtung, um bei dem Empfang der ausgegebenen Unterbrechungsanforderung eine Unterbrechungsroutine mit hoher Priorität durchzuführen, um insbesondere ein Herunterfahren der Datenverarbeitungsvorrichtung zu erzwingen. Dabei kann es für die Datenverarbeitungsvorrichtung funktional notwendig sein, die Unterbrechungsroutine durchzuführen, z. B. stets durch die Unterbrechungsroutine in der Form eines Abschaltprozesses (einem sogenannten Shutdown) ordnungsgemäß heruntergefahren zu werden. Die Unterbrechungsroutine bzw. der Abschaltprozess bzw. das Herunterfahren kann dabei wenigstens einen der nachfolgenden Schritte umfassen:
- Prüfen, welche Programme auf der Datenverarbeitungsvorrichtung laufen,
- laufende Programme beenden,
- alle noch aktiven Prozesse und/oder Protokolle bei der Datenverarbeitungsvorrichtung auf eine Speichervorrichtung der Datenverarbeitungsvorrichtung speichern,
- Benutzereinstellungen speichern,
- das Dateisystem der Datenverarbeitungsvorrichtung aushängen.

Nach einem Abschluss der Unterbrechungsroutine bzw. des Abschaltprozesses bzw. des Herunterfahrens kann ein Abschlusssignal (z. B. durch die Datenverarbeitungsvorrichtung und/oder durch eine zweite Auslöseanordnung) ausgegeben werden. Dieses Abschlusssignal kann dazu führen, dass über eine zweite Auslöseanordnung ein zweites Ereignissignal an die Verarbeitungseinheit oder an eine zweite Ausgabeanordnung übertragen wird, um die Verarbeitungseinheit über den Abschluss in Kenntnis zu setzen.

Zudem ist im Rahmen der Erfindung denkbar, dass zusätzlich zur Auslöseanordnung in der Form einer ersten Auslöseanordnung eine zweite Auslöseanordnung vorgesehen ist, und optional zusätzlich zur Ausgabeanordnung in der Form einer ersten Ausgabeanordnung eine zweite Ausgabeanordnung vorgesehen ist, und vorzugsweise zusätzlich zur Übertragungsleitung in der Form einer ersten Übertragungsleitung eine zweite Übertragungsleitung zur weiteren Datenübertragung durch die Datenverarbeitungsvorrichtung und die Verarbeitungseinheit vorgesehen ist, wobei die zweite Auslöseanordnung und optional die zweite Ausgabeanordnung jeweils mit der (zweiten) Übertragungsleitung gekoppelt ist bzw. sind, um die (zweite) Übertragungsleitung zusätzlich zur Datenverarbeitungsvorrichtung und Verarbeitungseinheit für eine Übertragung eines zweiten Ereignissignals zu verwenden, wobei bevorzugt das zweite Ereignissignal für ein erfolgtes Herunterfahren der Datenverarbeitungsvorrichtung spezifisch ist. Die weitere Datenübertragung ist bspw. eine weitere reguläre Datenübertragung zur Übertragung der Daten von der Verarbeitungseinheit an die Datenverarbeitungsvorrichtung.

Ebenfalls Gegenstand der Erfindung ist ein Haushaltsgerät, insbesondere eine Küchenmaschine, mit wenigstens einer Bearbeitungsvorrichtung, insbesondere zur zumindest teilweise automatischen Zubereitung von Lebensmitteln, aufweisend ein erfindungsgemäßes System, um mittels der übertragenen Daten die Verarbeitungseinheit für den Betrieb der wenigstens einen Bearbeitungsvorrichtung anzusteuern. Damit bringt das erfindungsgemäße Haushaltsgerät die gleichen Vorteile mit sich, wie sie ausführlich mit Bezug auf ein erfindungsgemäßes System beschrieben worden sind.

Ebenfalls Gegenstand der Erfindung ist ein Verfahren zur Bereitstellung einer Unterbrechungsroutine bei einem Haushaltsgerät mit einem erfindungsgemäßen System zum Betreiben des Haushaltsgeräts.

Hierbei ist vorgesehen, dass die nachfolgenden Schritte durchgeführt werden, vorzugsweise nacheinander in der angegebenen oder in beliebiger Reihenfolge, wobei einzelne Schritte ggf. auch wiederholt durchgeführt werden können:
a) Durchführen einer Datenverarbeitung durch eine Datenverarbeitungsvorrichtung des Haushaltsgeräts für eine Ansteuerung des Haushaltsgeräts, vorzugsweise einer Bearbeitungsvorrichtung des Haushaltsgeräts, insbesondere über die Verarbeitungseinheit,
b) Durchführen einer, insbesondere zeitunkritischen und/oder niederprioritären, Datenübertragung über wenigstens oder genau eine Übertragungsleitung zwischen der Datenverarbeitungsvorrichtung und einer Verarbeitungseinheit des Haushaltsgeräts, um anhand der (durch die Datenübertragung) übertragenen Daten das Haushaltsgerät durch die Verarbeitungseinheit anzusteuern,
c) Durchführen einer Erkennung eines Auslöseereignisses bei dem Haushaltsgerät, welches für einen kritischen Zustand bei dem Haushaltsgerät spezifisch ist, insbesondere für einen Ausfall einer Energieversorgung des Haushaltsgeräts, insbesondere einer Energieversorgung für die Datenverarbeitungsvorrichtung,
d) Durchführen einer, insbesondere zeitkritischen und/oder hochprioritären, Übertragung eines Ereignissignals über die gleiche Übertragungsleitung, um bei der Erkennung des Auslöseereignisses die Datenverarbeitung (durch die Datenverarbeitungsvorrichtung) durch die Unterbrechungsroutine, insbesondere ein Herunterfahren der Datenverarbeitungsvorrichtung, zu unterbrechen.

Damit bringt das erfindungsgemäße Verfahren die gleichen Vorteile mit sich, wie sie ausführlich mit Bezug auf ein erfindungsgemäßes Überwachungssystem und/oder ein erfindungsgemäßes System und/oder ein erfindungsgemäßes Haushaltsgerät beschrieben worden sind. Zudem kann das Verfahren geeignet sein, ein erfindungsgemäßes Überwachungssystem und/oder ein erfindungsgemäßes System und/oder ein erfindungsgemäßes Haushaltsgerät zu betreiben.

In einer weiteren Möglichkeit kann vorgesehen sein, dass die Unterbrechung der Datenverarbeitung dadurch erfolgt, dass durch eine Ausgabeanordnung eine Unterbrechungsanforderung an die Datenverarbeitungsvorrichtung ausgegeben wird, wenn die Ausgabeanordnung das Ereignissignal an der Übertragungsleitung detektiert, wobei vorzugsweise die Unterbrechungsanforderung ein sofortiges Herunterfahren der Datenverarbeitungsvorrichtung gemäß der Unterbrechungsroutine auslöst. Damit kann die Datenverarbeitungsvorrichtung vor dem vollständigen Wegfall der Energieversorgung in einen sicheren Zustand überführt werden.

Gemäß einem weiteren Vorteil kann vorgesehen sein, dass das Ereignissignal dadurch übertragen wird, dass eine Auslöseanordnung das Auslöseereignis erkennt, und bei der Erkennung das Ereignissignal auf die Übertragungsleitung legt, sodass die Übertragungsleitung zusätzlich zur Datenverarbeitungsvorrichtung und Verarbeitungseinheit durch die Auslöseanordnung und insbesondere die Ausgabeanordnung für die Übertragung des Ereignissignals, insbesondere nur, bei erkanntem Auslöseereignis verwendet wird. Das Ereignissignal kann z. B. dadurch auf die Übertragungsleitung gelegt werden, dass ein Schaltmittel der Auslöseanordnung die Übertragungsleitung auf ein definiertes Potential legt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Figur 1: eine schematische Darstellung eines erfindungsgemäßen Überwachungssystems,
- Figur 2: eine weitere schematische Darstellung eines erfindungsgemäßen Überwachungssystems.

In den nachfolgenden Figuren werden für die gleichen technischen Merkmale auch von unterschiedlichen Ausführungsbeispielen die identischen Bezugszeichen verwendet.

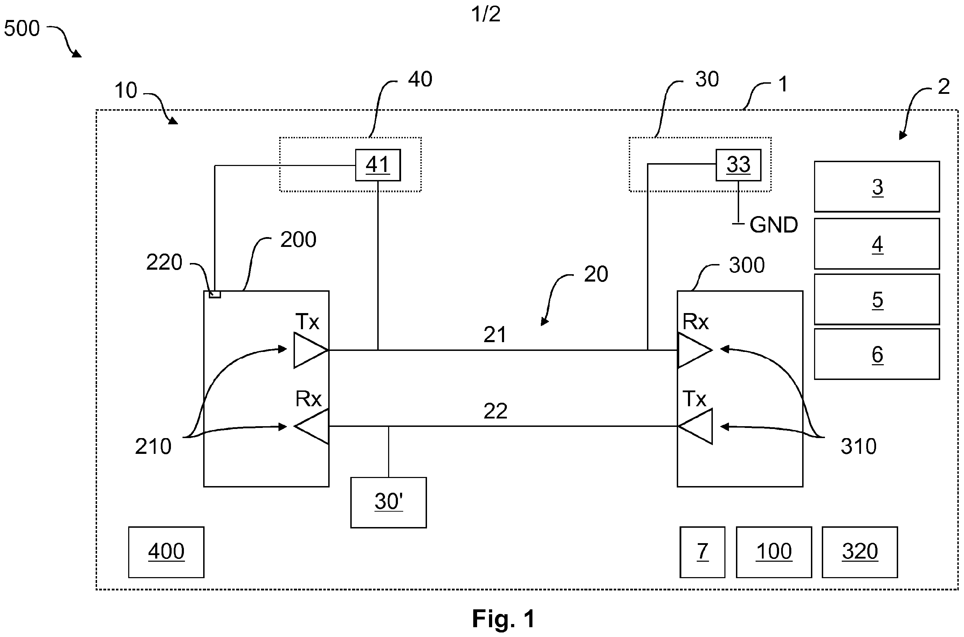

In Figur 1 ist ein erfindungsgemäßes Überwachungssystem 10 für ein Haushaltsgerät 1 mit wenigstens einer Bearbeitungsvorrichtung 2 gezeigt. Das Haushaltsgerät 1 kann insbesondere als eine Küchenmaschine 1 mit der wenigstens einen Bearbeitungsvorrichtung 2 zur zumindest teilweise automatischen Zubereitung von Lebensmitteln ausgebildet sein. Darüber hinaus kann das Haushaltsgerät 1 auch als ein Staubsauger oder ein Ofen oder dergleichen ausgebildet sein. Beispielhaft sind als die Bearbeitungsvorrichtung 2 eine Heizung 3, ein Rührwerk 4 und ein Antrieb 5 für das Rührwerk 4 gezeigt. Die Heizung 3 dient insbesondere zur Erhitzung der Lebensmittel, während das Rührwerk 4 in einem Rührgefäß 6 angetrieben durch den Antrieb 5 die Lebensmittel verarbeitet. Die Bearbeitungsvorrichtungen 2 können dabei durch eine Verarbeitungseinheit 300 mittels einer Leistungselektronik 320 angesteuert werden. Um diese Ansteuerung in Abhängigkeit von einer Benutzereingabe bei einer Ein- und/oder Ausgabevorrichtung 400 durchzuführen, kann eine Datenverarbeitungsvorrichtung 200 die Benutzereingabe auswerten und entsprechend der Auswertung über eine Datenübertragung die Verarbeitungseinheit 300 ansteuern.

In Figur 1 ist beispielhaft dargestellt, dass zur Verwendung für die Datenübertragung durch die Datenverarbeitungsvorrichtung 200 des Haushaltsgeräts 1 und die Verarbeitungseinheit 300 des Haushaltsgeräts 1 wenigstens eine Übertragungsleitung 21 vorgesehen ist. Dies ermöglicht es, mittels der übertragenen Daten die Verarbeitungseinheit 300 für den Betrieb der wenigstens einen Bearbeitungsvorrichtung 2 anzusteuern. Es kann die Übertragungsleitung 21 als eine erste Übertragungsleitung 21 zur Übertragung der Daten von der Datenverarbeitungsvorrichtung 200 an die Verarbeitungseinheit 300 genutzt werden. Hierzu ist bspw. ein Sender Tx einer Sende-Empfangs-Anordnung 210 der Datenverarbeitungsvorrichtung 200 mit der Übertragungsleitung 21 verbunden, um die Daten auszusenden. Ferner kann ein Empfänger Rx eines Sende-Empfangs-Mittels 310 der Verarbeitungseinheit 300 mit der Übertragungsleitung 21 verbunden sein, um die ausgesendeten Daten zu empfangen. Auch ist es möglich, dass eine zweite Übertragungsleitung 22 vorgesehen ist, um Daten von der Verarbeitungseinheit 300 an die Datenverarbeitungsvorrichtung 200 zu übertragen. Hierzu kann ein Sender Tx des Sende-Empfangs-Mittels 310 der Verarbeitungseinheit 300 mit der zweiten Übertragungsleitung 22 verbunden sein, um die Daten auszusenden. Ferner kann ein Empfänger Rx der Sende-Empfangs-Anordnung 210 der Datenverarbeitungsvorrichtung 200 mit der zweiten Übertragungsleitung 22 verbunden sein, um die ausgesendeten Daten zu empfangen. Entsprechend können die Übertragungsleitungen 21, 22 und die Sende-Empfangs-Anordnung 210 und das Sende-Empfangs-Mittel 310 als eine Übertragungsanordnung 20 verstanden werden. Die Sende-Empfangs-Anordnung 210 und das Sende-Empfangs-Mittel 310 können jeweils als UART-Schnittstelle ausgebildet sein, welche insbesondere als Ruhepegel ein High-Potential auf den Übertragungsleitungen 21, 22 nutzt. Die Übertragungsleitungen 21, 22 weisen vorzugsweise jeweils genau eine ("1") galvanisch getrennte Leitung auf.

Es ist ferner eine elektronische Auslöseanordnung 30 zur Erkennung eines Auslöseereignisses bei dem Haushaltsgerät 1 vorgesehen. Das Auslöseereignis ist bspw. ein Ausfall einer Energieversorgung für das Haushaltsgerät 1, insbesondere für die Datenverarbeitungsvorrichtung 200. In diesem Fall kann es entscheidend sein, in kurzer Zeit durch eine Unterbrechungsroutine die Datenverarbeitungsvorrichtung 200 herunterzufahren.

Außerdem ist eine elektronische Ausgabeanordnung 40 zur Ausgabe einer Unterbrechungsanforderung an die Datenverarbeitungsvorrichtung 200 vorgesehen. Die Unterbrechungsanforderung wird bspw. über einen Unterbrechungseingang 220, wie einen Interrupt-Eingang, von der Ausgabeanordnung 40 an die Datenverarbeitungsvorrichtung 200 ausgegeben, um die Unterbrechungsroutine auszulösen.

Die Auslöseanordnung 30 und die Ausgabeanordnung 40 können jeweils separat von der Datenverarbeitungsvorrichtung 200 und der Verarbeitungseinheit 300 ausgebildet sein und sind jeweils mit der Übertragungsleitung 21 gekoppelt, um die Übertragungsleitung 21 zusätzlich zur Datenverarbeitungsvorrichtung 200 und Verarbeitungseinheit 300 für eine Übertragung eines Ereignissignals bei erkanntem Auslöseereignis zu verwenden, um ausgelöst durch das Ereignissignal die Unterbrechungsanforderung auszugeben. Damit kann nach dem Erkennen des Auslöseereignisses in kurzer Zeit die Auslösung der Unterbrechungsroutine bewirkt werden.

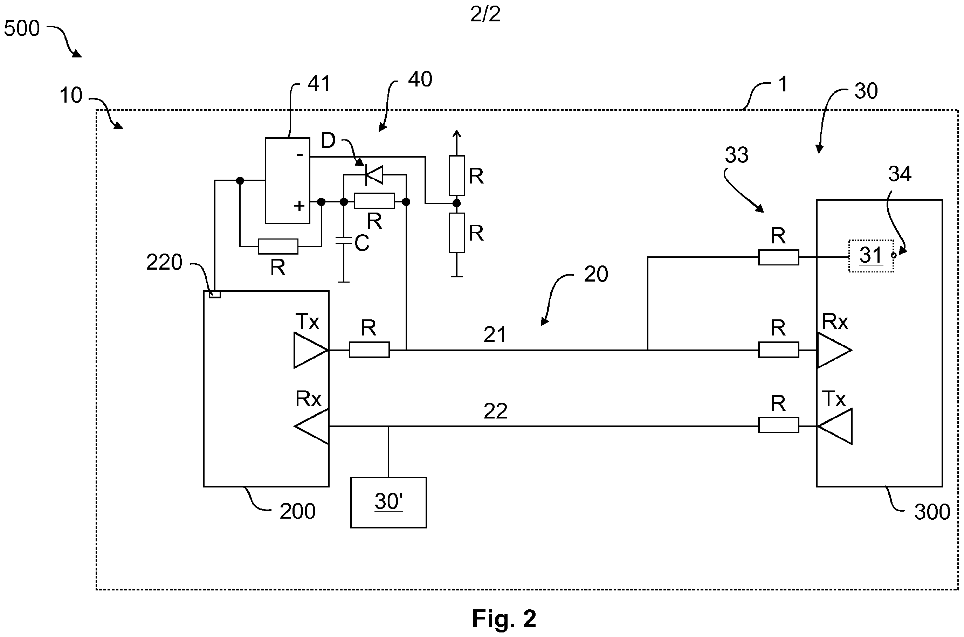

In Figur 2 ist ein Überwachungssystem 10 mit weiteren beispielhaften Einzelheiten gezeigt. Die Auslöseanordnung 30 kann ein Erkennungsmittel 31 aufweisen, um das Auslöseereignis zu erkennen und das Ereignissignal auf der Übertragungsleitung 21 für die Übertragung auszugeben, und insbesondere der Datenübertragung zu überlagern. Das Auslöseereignis kann bspw. ein elektrisches Signal sein, welches durch eine Netzüberwachungsvorrichtung 100 ausgegeben wird, um einen Ausfall der Energieversorgung zu signalisieren. Hierzu kann die Netzüberwachungsvorrichtung 100 z. B. ein Netzteil 7 des Haushaltsgeräts 1 überwachen, wie in Figur 1 veranschaulicht wird.

Außerdem kann die Ausgabeanordnung 40 ein Detektionsmittel 41, wie einen Komparator 41, aufweisen, um bei einer Detektion des ausgegebenen Ereignissignals an der Übertragungsleitung 21, und damit ausgelöst durch das Ereignissignal, die Unterbrechungsanforderung an die Datenverarbeitungsvorrichtung 200 auszugeben. Es ist dargestellt, dass durch Widerstände R ein Spannungsteiler ausgebildet wird, um eine Referenzspannung für das Detektionsmittel 41 bereitzustellen. Außerdem wird eine Anordnung aus einem Widerstand R, einer Diode D und einem Kondensator C genutzt, um das elektrische Potential an der Übertragungsleitung 21 für das Detektionsmittel 41 bereitzustellen. Das Detektionsmittel 41 kann auf diese Weise erkennen, wenn durch die Auslöseanordnung 30 das elektrische Potential an der Übertragungsleitung 21 zur Ausgabe des Ereignissignals verändert wird, insbesondere auf ein definiertes Potential GND wie Masse gezogen wird. Das Erkennungsmittel 31 kann in die Verarbeitungseinheit 300, wie einen Mikrocontroller, integriert sein, oder extern davon vorgesehen sein.

Entsprechend Figur 2 ist die Ausgabeanordnung 40 und die Auslöseanordnung 30 dediziert für die Übertragung des Ereignissignals vorgesehen, um unabhängig von der Datenübertragung und/oder prioritär zur Datenübertragung das Ereignissignal über die Übertragungsleitung 21 zu übertragen. Es ist gezeigt, dass die Auslöseanordnung 30 eine Kopplungsanordnung 33 mit dem Erkennungsmittel 31, insbesondere einem elektronischen Schaltmittel 31, und insbesondere wenigstens einem Widerstand R aufweisen kann, um durch die Kopplungsanordnung 33 die Übertragungsleitung 21 mit dem definierten Potential GND, insbesondere Massepotential, elektrisch zu verbinden. Das Erkennungsmittel 31 kann zur Erkennung des Auslöseereignisses einen Steueranschluss 34 aufweisen, um das Auslöseereignis, insbesondere von einer Netzüberwachungsvorrichtung 100, zu empfangen, und um bei dem Empfang ein Schalten des Erkennungsmittels 31 zu initiieren.

Ferner ist in den Figuren 1 und 2 auch ein erfindungsgemäßes System 500 zum Betreiben eines Haushaltsgeräts gezeigt. Dabei ist gezeigt, dass die Datenverarbeitungsvorrichtung 200 für einen Empfang der ausgegebenen Unterbrechungsanforderung mit der Ausgabeanordnung 40 in Signalverbindung steht, insbesondere über einen Unterbrechungseingang 220 der Datenverarbeitungsvorrichtung 200, um bei dem Empfang der ausgegebenen Unterbrechungsanforderung eine Unterbrechungsroutine mit hoher Priorität durchzuführen, um insbesondere ein Herunterfahren der Datenverarbeitungsvorrichtung 200 zu erzwingen.

Außerdem kann zusätzlich zur Auslöseanordnung 30 in der Form einer ersten Auslöseanordnung 30 eine zweite Auslöseanordnung 30' vorgesehen sein, und zusätzlich zur Übertragungsleitung 21 in der Form einer ersten Übertragungsleitung 21 eine zweite Übertragungsleitung 22 zur weiteren Datenübertragung durch die Datenverarbeitungsvorrichtung 200 und die Verarbeitungseinheit 300 vorgesehen sein, wobei die zweite Auslöseanordnung 30' mit der zweiten Übertragungsleitung 22 gekoppelt ist, um die zweite Übertragungsleitung 22 zusätzlich zur Datenverarbeitungsvorrichtung 200 und Verarbeitungseinheit 300 für eine Übertragung eines zweiten Ereignissignals zu verwenden, wobei das zweite Ereignissignals für ein erfolgtes Herunterfahren der Datenverarbeitungsvorrichtung 200 spezifisch ist.

Ferner dienen die Figuren 1 und 2 zur Visualisierung eines erfindungsgemäßen Verfahrens, bei welchem die Unterbrechungsroutine bei dem Haushaltsgerät 1 bereitgestellt wird. Hierbei kann durch die Datenverarbeitungsvorrichtung 200 eine Datenverarbeitung für eine Ansteuerung des Haushaltsgeräts 1 durchgeführt werden. Außerdem kann die Datenübertragung über die wenigstens eine Übertragungsleitung 21 zwischen der Datenverarbeitungsvorrichtung 200 und der Verarbeitungseinheit 300 des Haushaltsgeräts 1 erfolgen, um anhand der übertragenen Daten das Haushaltsgerät 1 durch die Verarbeitungseinheit 300 anzusteuern. Weiter kann ein Durchführen einer Erkennung des Auslöseereignisses bei dem Haushaltsgerät 1 vorgesehen sein, wobei das Auslöseereignis für einen kritischen Zustand bei dem Haushaltsgerät 1 spezifisch ist, insbesondere für den Ausfall der Energieversorgung des Haushaltsgeräts 1. Anschließend kann ein Durchführen einer Übertragung des Ereignissignals über die gleiche Übertragungsleitung 21 erfolgen, um bei der Erkennung des Auslöseereignisses die Datenverarbeitung durch die Datenverarbeitungsvorrichtung 200 durch die Unterbrechungsroutine zu unterbrechen.

Die voranstehende Erläuterung der Ausführungsformen beschreibt die vorliegende Erfindung ausschließlich im Rahmen von Beispielen.

### Bezugszeichenliste

- 1: Haushaltsgerät, Küchenmaschine
- 2: Bearbeitungsvorrichtung
- 3: Heizung
- 4: Rührwerk
- 5: Antrieb für 2b
- 6: Rührgefäß
- 7: Netzteil

- 10: Überwachungssystem

- 20: Übertragungsanordnung
- 21: Übertragungsleitung, Sende-Empfangs-Leitung, erste Übertragungsleitung
- 22: zweite Übertragungsleitung, Empfangs-Sende-Leitung

- 30: Auslöseanordnung, erste Auslöseanordnung
- 30': zweite Auslöseanordnung
- 31: Erkennungsmittel, Schaltmittel
- 33: Kopplungsanordnung
- 34: Steueranschluss

- 40: Ausgabeanordnung, erste Ausgabeanordnung
- 41: Detektionsmittel, Komparator

- 100: Netzüberwachungsvorrichtung

- 200: Datenverarbeitungsvorrichtung, Computer
- 210: Sende-Empfangs-Anordnung

- 220: Unterbrechungseingang
- 300: Verarbeitungseinheit, Mikrocontroller
- 310: Sende-Empfangs-Mittel

- 320: Leistungselektronik

- 400: Ein- und/oder Ausgabevorrichtung

- 500: System

- GND: definiertes Potential
- R: Widerstand

## Patentansprüche

1. Überwachungssystem (10) für ein Haushaltsgerät (1), insbesondere für eine Küchenmaschine (1) mit wenigstens einer Bearbeitungsvorrichtung (2) zur zumindest teilweise automatischen Zubereitung von Lebensmitteln, aufweisend:
- wenigstens eine Übertragungsleitung (21) zur Verwendung für eine Datenübertragung durch eine Datenverarbeitungsvorrichtung (200) des Haushaltsgeräts (1) und eine Verarbeitungseinheit (300) des Haushaltsgeräts (1), insbesondere um mittels der übertragenen Daten die Verarbeitungseinheit (300) für den Betrieb der wenigstens einen Bearbeitungsvorrichtung (2) anzusteuern,
- eine elektronische Auslöseanordnung (30) zur Erkennung eines Auslöseereignisses bei dem Haushaltsgerät (1),
- eine elektronische Ausgabeanordnung (40) zur Ausgabe einer Unterbrechungsanforderung an die Datenverarbeitungsvorrichtung (200),
wobei die Auslöseanordnung (30) und die Ausgabeanordnung (40) jeweils mit der Übertragungsleitung (21) gekoppelt sind, um die Übertragungsleitung (21) zusätzlich zur Datenverarbeitungsvorrichtung (200) und Verarbeitungseinheit (300) für eine Übertragung eines Ereignissignals bei erkanntem Auslöseereignis zu verwenden, um ausgelöst durch das Ereignissignal die Unterbrechungsanforderung auszugeben,
wobei sich die technische Realisierung der Ereignisübertragung von der Übertragungstechnologie der Datenübertragung unterscheidet,
wobei die Auslöseanordnung (30) ein Erkennungsmittel (31) aufweist, um das Auslöseereignis zu erkennen und das Ereignissignal auf der Übertragungsleitung (21) für die Übertragung auszugeben, und der Datenübertragung zu überlagern, und wobei die Ausgabeanordnung (40) ein Detektionsmittel (41) aufweist, um bei einer Detektion des ausgegebenen Ereignissignals an der Übertragungsleitung (21), und damit ausgelöst durch das Ereignissignal, die Unterbrechungsanforderung an die Datenverarbeitungsvorrichtung (200) auszugeben,
wobei das Ereignissignal ein definiertes elektrisches Potential (GND) an der Übertragungsleitung (21) ist.

2. Überwachungssystem (10) nach einem der vorhergehenden Ansprüche,
**dadurch gekennzeichnet,**
**dass** die Ausgabeanordnung (40) und die Auslöseanordnung (30) dediziert für die Übertragung des Ereignissignals vorgesehen sind, um unabhängig von der Datenübertragung und/oder prioritär zur Datenübertragung das Ereignissignal über die Übertragungsleitung (21) zu übertragen.

3. Überwachungssystem (10) nach einem der vorhergehenden Ansprüche,
**dadurch gekennzeichnet,**
**dass** die Auslöseanordnung (30) eine Kopplungsanordnung (33) mit einem elektronischen Schaltmittel (31) und insbesondere wenigstens einem Widerstand (R) aufweist, wobei die Kopplungsanordnung (33) die Übertragungsleitung (21) mit dem definierten elektrischen Potential (GND), insbesondere Massepotential, elektrisch verbindet, um ausgelöst durch ein Schalten des Schaltmittels (31) unabhängig von der Datenübertragung und/oder prioritär zur Datenübertragung das Ereignissignal auf der Übertragungsleitung (21) für die Übertragung auszugeben.

4. Überwachungssystem (10) nach einem der vorhergehenden Ansprüche,
**dadurch gekennzeichnet,**
**dass** eine Netzüberwachungsvorrichtung (100) zur Überwachung einer Energieversorgung des Haushaltsgeräts (1) vorgesehen ist, um das Auslöseereignis an die Auslöseanordnung (30) auszugeben, wobei das Auslöseereignis für einen Ausfall der Energieversorgung spezifisch ist.

5. Überwachungssystem (10) nach einem der vorhergehenden Ansprüche,
**dadurch gekennzeichnet,**
**dass** die Auslöseanordnung (30) ein Schaltmittel (31) aufweist, welches zur Erkennung des Auslöseereignisses einen Steueranschluss (34) aufweist, um das Auslöseereignis, insbesondere von einer Netzüberwachungsvorrichtung (100), zu empfangen, und um bei dem Empfang ein Schalten des Schaltmittels (31) zu initiieren.

6. Überwachungssystem (10) nach einem der vorhergehenden Ansprüche,
**dadurch gekennzeichnet,**
**dass** die Verarbeitungseinheit (300) einen Mikrocontroller aufweist, wobei insbesondere die Auslöseanordnung (30) ein Schaltmittel (31) aufweist, welches in den Mikrocontroller integriert ist, und/oder
**dass** die Datenverarbeitungsvorrichtung (200) als ein Computer ausgebildet ist, welcher insbesondere zum Betreiben durch ein Betriebssystem ausgeführt ist, und mit einer Ein- und/oder Ausgabevorrichtung (400) in Signalverbindung steht, um anhand einer durch die Ein- und/oder Ausgabevorrichtung (400) übermittelten Benutzereingabe die Verarbeitungseinheit (300) über die Datenübertragung anzusteuern.

7. Überwachungssystem (10) nach einem der vorhergehenden Ansprüche,
**dadurch gekennzeichnet,**
**dass** die Datenverarbeitungsvorrichtung (200) dazu ausgeführt ist, mittels der Datenübertragung die Verarbeitungseinheit (300) für den Betrieb von wenigstens einer Bearbeitungsvorrichtung (2) des Haushaltsgeräts (1) anzusteuern, wobei vorzugsweise für den Betrieb eine Leistungselektronik (320) in die Verarbeitungseinheit (300) integriert ist und/oder mit der Verarbeitungseinheit (300) in Signalverbindung steht.

8. System (500) zum Betreiben eines Haushaltsgeräts, aufweisend:
- eine elektronische Verarbeitungseinheit (300) zur Ansteuerung des Haushaltsgeräts (1),
- eine elektronische Datenverarbeitungsvorrichtung (200) zur Verarbeitung von Daten und zur Übertragung der Daten für die Ansteuerung an die Verarbeitungseinheit (300) über wenigstens eine Übertragungsleitung (21), und
- ein Überwachungssystem (10) nach einem der vorhergehenden Ansprüche.

9. System (500) nach Anspruch 8,
**dadurch gekennzeichnet,**
**dass** die Datenverarbeitungsvorrichtung (200) für einen Empfang der ausgegebenen Unterbrechungsanforderung mit der Ausgabeanordnung (40) in Signalverbindung steht, insbesondere über einen Unterbrechungseingang (220) der Datenverarbeitungsvorrichtung (200), um bei dem Empfang der ausgegebenen Unterbrechungsanforderung eine Unterbrechungsroutine mit hoher Priorität durchzuführen, um insbesondere ein Herunterfahren der Datenverarbeitungsvorrichtung (200) zu erzwingen.

10. System (500) nach einem der Ansprüche 8 oder 9,
**dadurch gekennzeichnet,**
**dass** zusätzlich zur Auslöseanordnung (30) in der Form einer ersten Auslöseanordnung (30) eine zweite Auslöseanordnung (30') vorgesehen ist, und zusätzlich zur Übertragungsleitung (21) in der Form einer ersten Übertragungsleitung (21) eine zweite Übertragungsleitung (22) zur weiteren Datenübertragung durch die Datenverarbeitungsvorrichtung (200) und die Verarbeitungseinheit (300) vorgesehen ist, wobei die zweite Auslöseanordnung (30') mit der zweiten Übertragungsleitung (22) gekoppelt ist, um die zweite Übertragungsleitung (22) zusätzlich zur Datenverarbeitungsvorrichtung (200) und Verarbeitungseinheit (300) für eine Übertragung eines zweiten Ereignissignals zu verwenden, wobei das zweite Ereignissignals für ein erfolgtes Herunterfahren der Datenverarbeitungsvorrichtung (200) spezifisch ist.

11. Haushaltsgerät (1), insbesondere Küchenmaschine, mit wenigstens einer Bearbeitungsvorrichtung (2), insbesondere zur zumindest teilweise automatischen Zubereitung von Lebensmitteln, aufweisend ein System (500) nach einem der Ansprüche 8 bis 10, um mittels der übertragenen Daten die Verarbeitungseinheit (300) für den Betrieb der wenigstens einen Bearbeitungsvorrichtung (2) anzusteuern.

12. Verfahren zur Bereitstellung einer Unterbrechungsroutine bei einem Haushaltsgerät (1) mit einem System (500) nach einem der Ansprüche 8 bis 10,
**wobei die nachfolgenden Schritte durchgeführt werden:**
a) Durchführen einer Datenverarbeitung durch eine Datenverarbeitungsvorrichtung (200) des Haushaltsgeräts (1) für eine Ansteuerung des Haushaltsgeräts (1),
b) Durchführen einer, insbesondere zeitunkritischen und/oder niederprioritären, Datenübertragung über wenigstens eine Übertragungsleitung (21) zwischen der Datenverarbeitungsvorrichtung (200) und einer Verarbeitungseinheit (300) des Haushaltsgeräts (1), um anhand der übertragenen Daten das Haushaltsgerät (1) durch die Verarbeitungseinheit (300) anzusteuern,
c) Durchführen einer Erkennung eines Auslöseereignisses bei dem Haushaltsgerät (1), welches für einen kritischen Zustand bei dem Haushaltsgerät (1) spezifisch ist, insbesondere für einen Ausfall einer Energieversorgung des Haushaltsgeräts (1),
d) Durchführen einer, insbesondere zeitkritischen und/oder hochprioritären, Übertragung eines Ereignissignals über die gleiche Übertragungsleitung (21), um bei der Erkennung des Auslöseereignisses die Datenverarbeitung durch die Datenverarbeitungsvorrichtung (200) durch die Unterbrechungsroutine zu unterbrechen.

13. Verfahren nach Anspruch 12,
**dadurch gekennzeichnet,**
**dass** die Unterbrechung der Datenverarbeitung dadurch erfolgt, dass durch eine Ausgabeanordnung (40) eine Unterbrechungsanforderung an die Datenverarbeitungsvorrichtung (200) ausgegeben wird, wenn die Ausgabeanordnung (40) das Ereignissignal an der Übertragungsleitung (21) detektiert, wobei vorzugsweise die Unterbrechungsanforderung ein sofortiges Herunterfahren der Datenverarbeitungsvorrichtung (200) gemäß der Unterbrechungsroutine auslöst.

14. Verfahren nach einem der Ansprüche 12 oder 13,
**dadurch gekennzeichnet,**
**dass** das Ereignissignal dadurch übertragen wird, dass eine Auslöseanordnung (30) das Auslöseereignis erkennt, und bei der Erkennung das Ereignissignal auf die Übertragungsleitung (21) legt, sodass die Übertragungsleitung (21) zusätzlich zur Datenverarbeitungsvorrichtung (200) und Verarbeitungseinheit (300) durch die Auslöseanordnung (30) und insbesondere die Ausgabeanordnung (40) für die Übertragung des Ereignissignals, insbesondere nur, bei erkanntem Auslöseereignis verwendet wird, und/oder
**dass** ein Überwachungssystem (10) und/oder ein Haushaltsgerät (1) jeweils nach einem der vorhergehenden Ansprüche betrieben wird.

## Claims

1. Monitoring system (10) for a household appliance (1), in particular for a food processor (1) with at least one processing device (2) for the at least partially automatic preparation of food, comprising:
- at least one transmission line (21) for use for data transmission by a data processing device (200) of the household appliance (1) and a processing unit (300) of the household appliance (1), in particular for controlling the processing unit (300) for the operation of the at least one processing device (2) by means of the transmitted data,
- an electronic triggering arrangement (30) for detecting a triggering event in the household appliance (1),
- an electronic output arrangement (40) for outputting an interrupt request to the data processing device (200),
wherein the trigger arrangement (30) and the output arrangement (40) are each coupled to the transmission line (21) in order to use the transmission line (21) in addition to the data processing device (200) and processing unit (300) for a transmission of an event signal when a triggering event is detected in order to output the interruption request triggered by the event signal,
wherein the technical realization of the event transmission differs from the transmission technology of the data transmission,
wherein the triggering arrangement (30) comprises a detection means (31) for recognizing the triggering event and outputting the event signal on the transmission line (21) for transmission, and superimposing it on the data transmission, and wherein the output arrangement (40) comprises a detection means (41) for outputting the interruption request to the data processing device (200) upon detection of the output event signal on the transmission line (21), and thus triggered by the event signal,
where the event signal is a defined electrical potential (GND) on the transmission line (21).

2. Monitoring system (10) according to one of the preceding claims,
**characterized in that**
the output arrangement (40) and the trigger arrangement (30) are provided specifically for the transmission of the event signal in order to transmit the event signal via the transmission line (21) independently of the data transmission and/or with priority over the data transmission.

3. Monitoring system (10) according to one of the preceding claims,
**characterized in that**
the triggering arrangement (30) has a coupling arrangement (33) with an electronic switching means (31) and, in particular, at least one resistor (R), the coupling arrangement (33) electrically connecting the transmission line (21) to the defined electrical potential (GND), in particular earth potential, in order to output the event signal on the transmission line (21) for the transmission, triggered by switching of the switching means (31), independently of the data transmission and/or with priority over the data transmission.

4. Monitoring system (10) according to one of the preceding claims,
**characterized in that**
a network monitoring device (100) is provided for monitoring a power supply of the household appliance (1) in order to output the triggering event to the trigger arrangement (30), the triggering event being specific to a failure of the power supply.

5. Monitoring system (10) according to one of the preceding claims,
**characterized in that**
the triggering arrangement (30) has a switching means (31) which has a control connection (34) for recognizing the triggering event, for receiving the triggering event, in particular from a network monitoring device (100), and for initiating switching of the switching means (31) on receipt.

6. Monitoring system (10) according to one of the preceding claims,
**characterized in that**
the processing unit (300) has a microcontroller, in particular the trigger arrangement (30) having a switching means (31) which is integrated in the microcontroller, and/or
**in that** the data processing device (200) is designed as a computer, which is designed in particular for operation by an operating system, and is in signal connection with an input and/or output device (400) in order to control the processing unit (300) via the data transmission on the basis of a user input transmitted by the input and/or output device (400).

7. Monitoring system (10) according to one of the preceding claims,
**characterized in that**
the data processing device (200) is designed to control the processing unit (300) for the operation of at least one processing device (2) of the household appliance (1) by means of the data transmission, preferably with power electronics (320) being integrated into the processing unit (300) and/or being in signal connection with the processing unit (300) for the operation.

8. A system (500) for operating a household appliance, comprising:
- an electronic processing unit (300) for controlling the household appliance (1),
- an electronic data processing device (200) for processing data and for transmitting the data for control to the processing unit (300) via at least one transmission line (21), and
- a monitoring system (10) according to any one of the preceding claims.

9. System (500) according to claim 8,
**characterized in that**
the data processing device (200) is in signal connection with the output arrangement (40) for receiving the issued interrupt request, in particular via an interrupt input (220) of the data processing device (200), in order to execute a high-priority interrupt routine when the issued interrupt request is received, in particular in order to force a shutdown of the data processing device (200).

10. The system (500) according to any one of claims 8 or 9,
**characterized in that**
in addition to the triggering arrangement (30) in the form of a first triggering arrangement (30), a second triggering arrangement (30') is provided, and in addition to the transmission line (21) in the form of a first transmission line (21), a second transmission line (22) is provided for further data transmission by the data processing device (200) and the processing unit (300), the second triggering arrangement (30') being coupled to the second transmission line (22) in order to use the second transmission line (22) in addition to the data processing device (200) and processing unit (300) for a transmission of a second event signal, the second event signal being specific to a shutdown of the data processing device (200) which has taken place.

11. Household appliance (1), in particular food processor, with at least one processing device (2), in particular for the at least partially automatic preparation of food, comprising a system (500) according to one of claims 8 to 10, in order to control the processing unit (300) for the operation of the at least one processing device (2) by means of the transmitted data.

12. A method for providing an interruption routine in a household appliance (1) comprising a system (500) according to any one of claims 8 to 10,
**whereby the following steps are carried out:**
a) performing data processing by a data processing device (200) of the household appliance (1) for controlling the household appliance (1),
b) carrying out a data transmission, in particular a non-time-critical and/or low-priority data transmission, via at least one transmission line (21) between the data processing device (200) and a processing unit (300) of the household appliance (1), in order to control the household appliance (1) by the processing unit (300) on the basis of the transmitted data,
c) Performing a detection of a triggering event at the household appliance (1) which is specific for a critical state at the household appliance (1), in particular for a failure of a power supply of the household appliance (1),
d) performing a transmission, in particular a time-critical and/or high-priority transmission, of an event signal via the same transmission line (21) in order to interrupt the data processing by the data processing device (200) by means of the interruption routine when the triggering event is detected.

13. Method according to claim 12,
**characterized in that**
the data processing is interrupted by an output arrangement (40) issuing an interruption request to the data processing device (200) when the output arrangement (40) detects the event signal on the transmission line (21), the interruption request preferably triggering an immediate shutdown of the data processing device (200) in accordance with the interruption routine.

14. Method according to any one of claims 12 or 13,
**characterized in that**
the event signal is transmitted **in that** a triggering arrangement (30) recognizes the triggering event and, upon recognition, applies the event signal to the transmission line (21), so that the transmission line (21) is used in addition to the data processing device (200) and processing unit (300) by the triggering arrangement (30) and in particular the output arrangement (40) for transmitting the event signal, in particular only when a triggering event is recognized, and/or
**in that** a monitoring system (10) and/or a household appliance (1) is operated in each case according to one of the preceding claims.

## Revendications

1. Système de surveillance (10) pour un appareil ménager (1), en particulier pour un robot ménager (1) avec au moins un dispositif de traitement (2) pour la préparation au moins partiellement automatique d'aliments, présentant :
- au moins une ligne de transmission (21) destinée à être utilisée pour une transmission de données par un dispositif de traitement de données (200) de l'appareil ménager (1) et une unité de traitement (300) de l'appareil ménager (1), en particulier pour commander, au moyen des données transmises, l'unité de traitement (300) pour le fonctionnement du au moins un dispositif de traitement (2),
- un dispositif de déclenchement électronique (30) pour la détection d'un événement de déclenchement dans l'appareil ménager (1),
- un dispositif de sortie électronique (40) pour émettre une demande d'interruption vers le dispositif de traitement de données (200),
dans lequel le dispositif de déclenchement (30) et le dispositif de sortie (40) sont respectivement couplés à la ligne de transmission (21) pour utiliser la ligne de transmission (21) en plus du dispositif de traitement de données (200) et de l'unité de traitement (300) pour transmettre un signal d'événement lors d'un événement de déclenchement détecté pour émettre la demande d'interruption déclenchée par le signal d'événement,
la réalisation technique de la transmission des événements étant différente de la technologie de transmission des données,
dans lequel le dispositif de déclenchement (30) comprend un moyen de détection (31) pour détecter l'événement de déclenchement et pour émettre le signal d'événement sur la ligne de transmission (21) pour la transmission, et pour le superposer à la transmission de données, et dans lequel le dispositif de sortie (40) comprend un moyen de détection (41) pour, lors d'une détection du signal d'événement émis sur la ligne de transmission (21), et donc déclenché par le signal d'événement, émettre la demande d'interruption vers le dispositif de traitement de données (200),
le signal d'événement étant un potentiel électrique défini (GND) sur la ligne de transmission (21).

2. Système de surveillance (10) selon l'une des revendications précédentes,
**caractérisé en ce que**
le dispositif de sortie (40) et le dispositif de déclenchement (30) sont prévus de manière dédiée pour la transmission du signal d'événement, afin de transmettre le signal d'événement via la ligne de transmission (21) indépendamment de la transmission de données et/ou en priorité par rapport à la transmission de données.

3. Système de surveillance (10) selon l'une des revendications précédentes,
**caractérisé en ce que**
le dispositif de déclenchement (30) présente un dispositif de couplage (33) avec un moyen de commutation électronique (31) et en particulier au moins une résistance (R), le dispositif de couplage (33) reliant électriquement la ligne de transmission (21) au potentiel électrique défini (GND), en particulier au potentiel de masse, afin de délivrer, déclenché par une commutation du moyen de commutation (31), indépendamment de la transmission de données et/ou prioritairement à la transmission de données, le signal d'événement sur la ligne de transmission (21) pour la transmission.

4. Système de surveillance (10) selon l'une des revendications précédentes,
**caractérisé en ce qu'**
un dispositif de surveillance de réseau (100) est prévu pour surveiller une alimentation en énergie de l'appareil ménager (1), afin d'émettre l'événement de déclenchement vers le dispositif de déclenchement (30), l'événement de déclenchement étant spécifique à une défaillance de l'alimentation en énergie.

5. Système de surveillance (10) selon l'une des revendications précédentes,
**caractérisé en ce que**
le dispositif de déclenchement (30) présente un moyen de commutation (31) qui présente un raccordement de commande (34) pour la reconnaissance de l'événement de déclenchement, afin de recevoir l'événement de déclenchement, en particulier d'un dispositif de surveillance de réseau (100), et pour initier une commutation du moyen de commutation (31) lors de la réception.

6. Système de surveillance (10) selon l'une des revendications précédentes,
**caractérisé en ce que**
l'unité de traitement (300) présente un microcontrôleur, le dispositif de déclenchement (30) présentant notamment un moyen de commutation (31) qui est intégré dans le microcontrôleur, et/ou
**en ce que** le dispositif de traitement de données (200) est réalisé sous la forme d'un ordinateur, qui est réalisé en particulier pour être exploité par un système d'exploitation, et est en liaison de signalisation avec un dispositif d'entrée et/ou de sortie (400), afin de commander l'unité de traitement (300) par l'intermédiaire de la transmission de données à l'aide d'une entrée utilisateur transmise par le dispositif d'entrée et/ou de sortie (400).

7. Système de surveillance (10) selon l'une des revendications précédentes,
**caractérisé en ce que**
le dispositif de traitement de données (200) est réalisé pour commander, au moyen de la transmission de données, l'unité de traitement (300) pour le fonctionnement d'au moins un dispositif de traitement (2) de l'appareil ménager (1), une électronique de puissance (320) étant de préférence intégrée dans l'unité de traitement (300) pour le fonctionnement et/ou étant en liaison de signal avec l'unité de traitement (300).

8. Système (500) pour faire fonctionner un appareil électroménager, comprenant :
- une unité de traitement électronique (300) pour la commande de l'appareil ménager (1),
- un dispositif électronique de traitement de données (200) pour traiter des données et pour transmettre les données pour la commande à l'unité de traitement (300) par l'intermédiaire d'au moins une ligne de transmission (21), et
- un système de surveillance (10) selon l'une des revendications précédentes.

9. Système (500) selon la revendication 8,
**caractérisé en ce que**
le dispositif de traitement de données (200) est en liaison de signal avec le dispositif de sortie (40) pour une réception de la demande d'interruption émise, en particulier par l'intermédiaire d'une entrée d'interruption (220) du dispositif de traitement de données (200), pour exécuter une routine d'interruption de priorité élevée lors de la réception de la demande d'interruption émise, afin de forcer en particulier un arrêt du dispositif de traitement de données (200).

10. Système (500) selon l'une des revendications 8 ou 9,
**caractérisé en ce que,**
en plus du dispositif de déclenchement (30) sous la forme d'un premier dispositif de déclenchement (30), un deuxième dispositif de déclenchement (30') est prévu, et en plus de la ligne de transmission (21) sous la forme d'une première ligne de transmission (21), une deuxième ligne de transmission (22) est prévue pour la transmission supplémentaire de données par le dispositif de traitement de données (200) et l'unité de traitement (300), dans lequel le deuxième dispositif de déclenchement (30') est couplé à la deuxième ligne de transmission (22) afin d'utiliser la deuxième ligne de transmission (22) en plus du dispositif de traitement de données (200) et de l'unité de traitement (300) pour une transmission d'un deuxième signal d'événement, le deuxième signal d'événement étant spécifique à un arrêt réussi du dispositif de traitement de données (200).

11. Appareil ménager (1), en particulier robot ménager, avec au moins un dispositif de traitement (2), en particulier pour la préparation au moins partiellement automatique d'aliments, présentant un système (500) selon l'une des revendications 8 à 10, pour commander, au moyen des données transmises, l'unité de traitement (300) pour le fonctionnement du au moins un dispositif de traitement (2).

12. Procédé pour fournir une routine d'interruption dans un appareil ménager (1) avec un système (500) selon l'une des revendications 8 à 10,
**où les étapes suivantes sont effectuer** :
a) réalisation d'un traitement de données par un dispositif de traitement de données (200) de l'appareil ménager (1) pour une commande de l'appareil ménager (1),
b) effectuer une transmission de données, en particulier non critique en temps et/ou à faible priorité, par au moins une ligne de transmission (21) entre le dispositif de traitement de données (200) et une unité de traitement (300) de l'appareil ménager (1), afin de commander l'appareil ménager (1) par l'unité de traitement (300) à l'aide des données transmises,
c) effectuer une détection d'un événement de déclenchement au niveau de l'appareil ménager (1), qui est spécifique à un état critique au niveau de l'appareil ménager (1), en particulier à une défaillance d'une alimentation en énergie de l'appareil ménager (1),
d) effectuer une transmission, en particulier critique en termes de temps et/ou hautement prioritaire, d'un signal d'événement via la même ligne de transmission (21), afin d'interrompre le traitement de données par le dispositif de traitement de données (200) par la routine d'interruption lors de la détection de l'événement déclencheur.

13. Procédé selon la revendication 12,
**caractérisé en ce que**
l'interruption du traitement de données s'effectue par le fait qu'une demande d'interruption est émise par un dispositif de sortie (40) vers le dispositif de traitement de données (200) lorsque le dispositif de sortie (40) détecte le signal d'événement sur la ligne de transmission (21), la demande d'interruption déclenchant de préférence un arrêt immédiat du dispositif de traitement de données (200) conformément à la routine d'interruption.

14. Procédé selon l'une des revendications 12 ou 13,
**caractérisé en ce que**
le signal d'événement est transmis par le fait qu'un dispositif de déclenchement (30) reconnaît l'événement de déclenchement et, lors de la reconnaissance, place le signal d'événement sur la ligne de transmission (21), de sorte que la ligne de transmission (21) est utilisée, en plus du dispositif de traitement de données (200) et de l'unité de traitement (300), par le dispositif de déclenchement (30) et en particulier par le dispositif de sortie (40) pour la transmission du signal d'événement, en particulier seulement, lorsque l'événement de déclenchement est reconnu, et/ou
**en ce que** un système de surveillance (10) et/ou un appareil ménager (1) est exploité respectivement selon l'une des revendications précédentes.
